# EUROPÄISCHE PATENTSCHRIFT

(11) **EP 2 504 380 B1**
(45) Veröffentlichungstag und Bekanntmachung des Hinweises auf die Patenterteilung: **13.08.2014**
(21) Anmeldenummer: 10788013.0
(22) Anmeldetag: 24.11.2010
(51) Int. Cl.: C08G 63/672, C08G 63/688, C11D 3/37

(54) **SOIL RELEASE POLYMERE MIT VERGRAUUNGSINHIBIERENDER WIRKUNG UND HOHER LÖSUNGSSTABILITÄT**
SOIL-RELEASE POLYMERS HAVING A GREY-INHIBITING EFFECT AND HAVING HIGH STABILITY IN SOLUTION
POLYMÈRES FACILITANT LE LAVAGE AYANT UN EFFET ANTIREDÉPOSITION ET UNE GRANDE STABILITÉ EN SOLUTION

(30) Priorität: 27.11.2009 DE 102009056127
(43) Veröffentlichungstag der Anmeldung: 03.10.2012
(73) Patentinhaber: Clariant Finance (BVI) Limited, Road Town, Tortola (VG)
(72) Erfinder: MORSCHHAEUSER, Roman, 55122 Mainz (DE); DUECKER, Barbara, 55122 Mainz (DE); SCHOLZ, Hans Juergen, 63755 Alzenau (DE)
(74) Vertreter: Paczkowski, Marcus
(86) Internationale Anmeldenummer: PCT/EP2010/007124
(87) Internationale Veröffentlichungsnummer: WO 2011/063944

(56) Entgegenhaltungen:
- WO-A1-95/02030
- WO-A1-2007/079850

## Beschreibung

Die Erfindung betrifft Soil Release Polymere (= SRP) in fester Form, die sich durch eine sehr gute Wasserlöslichkeit, eine hohe Hydrolysestabilität und eine ausgezeichnete Lösungsstabilität auszeichnen.

Der Einsatz von Polyestern in Waschmitteln zur Verbesserung der Schmutzablösung von Textilien, zur Reduzierung der Wiederanschmutzung, zum Schutz der Fasern bei mechanischer Belastung und zum Ausrüsten der Gewebe mit einem Anti-Knittereffekt ist bekannt. Eine Vielzahl von Polyestertypen und deren Verwendung in Wasch- und Reinigungsmitteln sind in der Patentliteratur beschrieben.

US 4,702,857 beansprucht Polyester aus Ethylenglykol, 1,2-Propylenglykol oder Mischungen daraus mit hohen Ethylenglykolanteilen, Polyethylenglykol mit mindestens 10 Glykoleinheiten, das an einem Ende mit einer kurzkettigen Alkylgruppe, insbesondere mit einer Methylgruppe verschlossen ist, einer Dicarbonsäure bzw. -ester und optional Alkalisalzen von sulfonierten aromatischen Dicarbonsäuren.

In US 4,427,557 werden Polyester mit Molekulargewichten im Bereich von 2.000 bis 10.000 g/mol, hergestellt aus den Monomeren Ethylenglykol, Polyethylenglykol mit Molekulargewichten von 200 bis 1.000 g/mol, aromatischen Dicarbonsäuren und Alkalisalzen von sulfonierten aromatischen Dicarbonsäuren und gegebenenfalls aus geringen Mengen an aliphatischen Dicarbonsäuren, beispielsweise Glutarsäure, Adipinsäure, Bernsteinsäure, Glutarsäure, Pimelinsäure, Korksäure, Azelainsäure, Sebacinsäure und 1,4-Cyclohexandicarbonsäure beschrieben und deren Anti-Knittereffekt und soil release Wirkung auf Polyester-Gewebe oder auf Polyester-BaumwollMischgewebe ausgelobt.

US 4,721,580 offenbart Polyester mit Terephthalat-Einheiten und sulfogruppenhaltigen Endgruppen, insbesondere sulfoethoxylierte Endgruppen MO₃S(CH₂CH₂O)ₙ-H und lobt deren Verwendung in Waschmitteln und Weichspülmitteln aus.

US 4,968,451 beschreibt Polyester mit sulfogruppenhaltigen Endgruppen, erhalten durch Copolymerisation von (Meth)allylalkohol, Alkylenoxid, Aryldicarbonsäure und C₂-C₄-Glykol und anschließender Sulfonierung.

In US 5,691,298 werden Polyester als SRP mit verzweigtem Rückgrat aus Di- oder Polyhydroxysulfonat, Terephthalat- und 1,2-Oxyalkylenoxy-Einheiten mit nichtionischen oder anionischen Endgruppen beansprucht.

In US 5,415,807 wird dargelegt, dass Soil Release Polymere mit sulfonierten Polyethoxy/Propoxy-Endgruppen zur Kristallisation neigen, woraus eine Reduzierung der Soil Release Effekte resultiert.

EP 1 966 273 A1 und WO 2008/110318 A2 offenbaren SRP aus Terephthalsäure, Sulfoisophthalsäure und (Poly)alkylenglykolen, die ein molares Propylenglykol/Ethylenglykol-Verhältnis von kleiner als 1,7 haben.

Aufgabe der vorliegenden Erfindung war es, SRP bereitzustellen, die eine gute vergrauungsinhibierende Wirkung für Textilien zeigen, als Granulate in rieselfähiger Form dargeboten werden können, die sich in Wasser gut lösen, hydrolysebeständig sind und in gelöster Form auch bei längerer Lagerung weitgehend eine dünnflüssige Konsistenz behalten.

Überraschenderweise wurde gefunden, dass nachstehende sulfogruppenhaltige Polyester mit einem bestimmten Propylenglykol/Ethylenglykol (PG/EG)-Verhältnis die erfindungsgemäße Aufgabe lösen.

Gegenstand der Erfindung sind daher Polyester, erhältlich durch Polymerisation der Komponenten, ausgewählt aus
a) einer oder mehreren sulfogruppenfreien aromatischen Dicarbonsäuren und/ oder deren Salzen und/ oder deren Anhydriden und/oder deren Ester,
b) optional einer oder mehreren sulfogruppenhaltigen Dicarbonsäuren, deren Salzen und/oder deren Anhydriden und/oder deren Ester,
c) 1,2-Propylenglykol,
d) Ethylenglykol,
e) einer oder mehreren Verbindungen der Formel (1)

   R¹O(CHR²CHR³O)ₙH (1)

   wobei
   - R¹: für eine lineare oder verzweigte, gesättigte oder ungesättigte Alkylgruppe mit 1 bis 22 C-Atomen steht, vorzugsweise für C₁-C₄-Alkyl, insbesondere Methyl,
   - R² und R³: unabhängig voneinander für Wasserstoff oder für eine Alkylgruppe mit 1 bis 4 Kohlenstoffatomen, vorzugsweise für Wasserstoff und/oder Methyl stehen und
   - n: eine Zahl von 1 bis 50, bevorzugt 2 bis 10 ist,
f) optional eine oder mehrere Verbindungen der Formel (2)

   H-(OCH₂CH₂)ₘ-SO₃X (2),

   wobei
   - m: für eine Zahl 1 bis 10 und
   - X: für Wasserstoff oder ein Alkalimetallion steht, und
g) optional ein oder mehrere vernetzend wirkende polyfunktionelle Verbindungen,
mit der Maßgabe, dass mindestens eine der Komponenten b) oder f) vorhanden ist, und mit der weiteren Maßgabe, dass das molare Verhältnis der Komponenten c) 1,2-Propylenglykol zu d) Ethylenglykol größer oder gleich 1,70 ist.

Zweckmäßigerweise beträgt das molare Verhältnis 1,2-Propylenglykol (PG): Ethylenglykol (EG) 1,70 bis 10,0, bevorzugt, 1,9 bis 9,0, insbesondere 2,0 bis 8,0, besonders bevorzugt 2,5 bis 7,0, ganz besonders bevorzugt 2,7 bis 5,0.

Bevorzugt sind Polyester, erhältlich durch Polymerisation der Komponenten a) bis g) in folgenden Molverhältnissen, bezogen auf 1 Mol Komponente a),
0 bis 4 Mol, vorzugsweise 0,1 bis 2 Mol, insbesondere 0,2 bis 1,5 Mol, ganz
besonders bevorzugt 0,3 bis 1,1 Mol, Komponente b),
0,1 bis 4 Mol, vorzugsweise 0,5 bis 3 Mol, insbesondere 0,6 bis 2,5 Mol, ganz besonders bevorzugt 0,8 bis 1,5 Mol der Diol-Komponente c) + d),
0,1 bis 4 Mol, vorzugsweise 0,2 bis 2 Mol, insbesondere 0,3 bis 1,0 Mol, ganz besonders bevorzugt 0,3 bis 0,8 Mol, Komponente e),
0 bis 4 Mol, vorzugsweise 0,1 bis 2 Mol, insbesondere 0,2 bis 1,0 Mol, ganz besonders bevorzugt 0,3 bis 0,8 Mol, Komponente f),
0 bis 0,2 Mol, vorzugsweise 0 bis 0,1 Mol, insbesondere 0 Mol, Komponente g), mit den vorstehend genannten Maßgaben.

Weiterhin bevorzugt sind Polyester, erhältlich durch Polymerisation der Komponenten a) bis g) in folgenden Molverhältnissen, bezogen auf 1 Mol Komponente a),
0,1 bis 2 Mol, insbesondere 0,2 bis 1,5 Mol, ganz besonders bevorzugt 0,3 bis 1,1 Mol, Komponente b),
0,5 bis 4 Mol, insbesondere 0,6 bis 3 Mol, ganz besonders bevorzugt 0,8 bis 2,5 Mol der Diol-Komponente c) + d),
0,1 bis 4 Mol, vorzugsweise 0,2 bis 2 Mol, insbesondere 0,3 bis 1,0 Mol, ganz besonders bevorzugt 0,3 bis 0,8 Mol, Komponente e),
0 Mol Komponente f),
0 Mol Komponente g),
mit den vorstehend genannten Maßgaben.

Bevorzugte Verbindungen der Komponente a) sind Terephthalsäure, insbesondere C₁-C₄-Alkylester der Terephthalsäure, beispielsweise Terephthalsäuredimethylester, sowie Isophthalsäure und C₁-C₄-Alkylester der Isophthalsäure.

Bevorzugte Verbindungen der Komponente b) sind 5-Sulfoisophthalsäure, insbesondere 5-Sulfoisophthalsäuredi(C₁-C₄)alkylester und deren Alkalimetallsalze, beispielsweise Alkalimetallsalze der 5-Sulfoisophthalsäure und 5-Sulfo-isophthalsäure-dimethylester-Natriumsalz oder -Lithiumsalz.

Bevorzugte Verbindungen der Komponente e) sind einseitig endverschlossene Polyalkylenglykole (Endstopfen), bevorzugt Poly[ethlyenglykol-co-propylenglykol]-monomethylether mit mittleren Molekulargewichten von ca. 150 bis 2.000 g/mol, besonders bevorzugt Polyethylenglykolmonomethylether der Formel (1 a)

CH₃-O-(C₂H₄O)ₙ-H (1a)

mit
n = 2 bis 10, bevorzugt mit n = 3 bis 5, insbesondere mit n = 4.

Bevorzugte Verbindungen der Komponente f) sind solche der Formel (2a)

H-(OCH₂CH₂)ₘ₋SO₃X (2a),

wobei
- m: für eine Zahl von 1 bis 4, besonders bevorzugt 1 und 2, und
- X: für Wasserstoff, Natrium oder Kalium, steht.

Bevorzugte Verbindungen der Komponente g) sind vernetzend wirkende polyfunktionelle Verbindungen mit 3 bis 6 zur Veresterungsreaktion befähigten funktionellen Gruppen, beispielsweise Säure-, Alkohol-, Ester-, Anhydrid- oder Epoxygruppen. Dabei sind auch unterschiedliche Funktionalitäten in einem Molekül möglich. Als bevorzugte Beispiele können hierbei Zitronensäure, Äpfelsäure, Weinsäure und Gallussäure, besonders bevorzugt 2,2-Dihydroxymethylpropionsäure benannt werden.

Weiterhin können mehrwertige Alkohole, wie Pentaerythrol, Glycerin, Sorbitol und Trimethylolpropan eingesetzt werden.

Weiterhin bevorzugt sind mehrwertige aliphatische und aromatische Carbonsäuren, wie Benzol-1,2,3-tricarbonsäure (Hemimellithsäure), Benzol-1,2,4-tricarbonsäure (Trimellithsäure), besonders bevorzugt Benzol-1,3,5-tricarbonsäure (Trimesithsäure).

Der Gewichtsanteil an Komponente g), bezogen auf die Gesamtmasse der Polyester, beträgt bevorzugt 0 bis 10 Gew.-%, besonders bevorzugt 0 bis 5 Gew.-% und insbesondere bevorzugt 0 bis 3 Gew.-%, ganz besonders bevorzugt 0 Gew.-%.

Die erfindungsgemäßen Polyester haben im Allgemeinen zahlenmittlere Molekulargewichte im Bereich von 700 bis 50.000 g/mol, bevorzugt von 800 bis 25.000 g/mol, insbesondere 1.000 bis 15.000 g/ mol, besonders bevorzugt 1.200 bis 12.000 g/mol. Das zahlenmittlere Molekulargewicht wird bestimmt mittels Größenausschlusschromatographie in wässriger Lösung unter Verwendung einer Kalibrierung mit Hilfe eng verteiltem Polyacrylsäure-Na-Salz Standard.

Alle Molekulargewichtsangaben in dieser Schrift beziehen sich auf das zahlenmittlere Molekulargewicht.

Des Weiteren können die erfindungsgemäßen Polyester zusätzlich zu den oben beschriebenen Komponenten a) bis g) Strukturelemente einer aliphatischen Dicarbonsäure, bevorzugt 1,4-Cyclohexandicarbonsäure, enthalten.

Der Gewichtsanteil der eingesetzten aliphatischen Dicarbonsäure kann 1 bis 15 %, bevorzugt 3 bis 10 %, besonders bevorzugt 5 bis 8 %, bezogen auf die Gesamtmenge der eingesetzten Monomere, betragen.

Die Synthese der erfindungsgemäßen Polyester erfolgt nach an sich bekannten Verfahren durch Polykondensation der Komponenten a) bis g). Zweckmäßigerweise werden die oben genannten Komponenten unter Zusatz eines Katalysators zunächst bei Normaldruck auf Temperaturen von 160 bis ca. 220 °C unter Verwendung einer Inert-Atmosphäre erhitzt, vorzugsweise in Gegenwart eines Salzes einer C₁-C₃-Alkyl-Carbonsäure, insbesondere ein dehydratisiertes oder partiell hydratisiertes Natriumacetat CH₃COONa x (H₂O)ₓ, wobei ₓ für eine Zahl im Bereich von 0 bis 2,9 steht, und wobei dieses Salz in Gewichtsmengen von 0,5 bis 30 %, bevorzugt von 1 bis 15 %, besonders bevorzugt von 3 bis 8 %, bezogen auf die Gesamtmenge der eingesetzten Monomere und dem Salz der Carbonsäure eingesetzt wird. Dann werden die erforderlichen Molekulargewichte im Vakuum bei Temperaturen von 160 bis ca. 240 °C durch Abdestillieren überstöchiometrischer Mengen der eingesetzten Glykole aufgebaut. Für die Reaktion eignen sich die bekannten Umesterungs- und Kondensationskatalysatoren des Standes der Technik, wie beispielsweise Titantetraisopropylat, Dibutylzinnoxid, Alkali- oder Erdalkalimetallalkoholate oder Antimontrioxid/Calciumacetat.

Ein bevorzugtes Verfahren zur Herstellung der erfindungsgemäßen Polyester ist dadurch gekennzeichnet, dass die Kondensation der Komponenten im Eintopfverfahren durchgeführt wird, wobei die Umesterungs- und Kondensationskatalysatoren vor dem Aufheizen zugegeben werden.

Die Polyester fallen bei der Synthese als Schmelze an, die durch Abkühlen in einem kühlen Gasstrom, beispielsweise Luft- oder Stickstoffstrom oder bevorzugt durch Aufbringen auf eine Schuppenwalze oder auf ein Laufband bei 40 bis 80 °C, bevorzugt bei 45 bis 55 °C, zu Schuppen oder Flakes verfestigt wird. Dieses Grobgut wird zweckmäßig zu Pulver mit Partikelgrößen von 10 bis 150 µm vermahlen, woran sich ggf. eine Siebung zur Grobkornabtrennung anschließen kann.

Zur Vermahlung eignet sich eine Reihe von Mühlen, die vorzugsweise nach dem Prinzip der Prallzerkleinerung arbeiten. So sind z. B. Hammermühlen, Stiftmühlen oder Strahlmühlen denkbar, die ggf. mit einem integrierten Sichter zur Oberkombegrenzung ausgerüstet sind. Die Mahlfeinheit des Pulvers lässt sich dabei durch Variation typischer Betriebsparameter (Mühlendrehzahl, Durchsatz) problemlos z. B. von d90,3 = 10 µm bis d90,3 = 150 µm variieren.

Für eine Granulierung kommen mehrere Methoden in Betracht:
In einer bevorzugten Ausführungsform erfolgt die Granulierung durch Kompaktierung des gemahlenen Pulvers mit oder ohne Zugabe von weiteren Additiven. Die Kompaktierung des Pulvermaterials mit Partikelgrößen d90,3 = 10 bis 150 µm wird vorzugsweise auf Walzenkompaktoren (z. B. von Fa. Hosokawa-Bepex, Alexanderwerk, Köppem) durchgeführt. Durch die Wahl des Walzenprofils lassen sich einerseits stückige Pellets oder Briketts und andererseits Presslinge erzeugen. Die Presslinge werden anschließend in einer Mühle auf Granulate mit der gewünschten Partikelgröße von ca. 100 - 1.600 µm zerkleinert.

In einer weiteren bevorzugten Ausführungsform erfolgt die Granulierung ausgehend vom Mahlpulver definierter Feinheit mittels einer Aufbaugranulierung im Mischer. Die Granulierung der Polyester, insbesondere die Granulierung der Polyester mit Additiven kann in üblichen, chargenweise oder kontinuierlich arbeitenden Mischvorrichtungen, die in der Regel mit rotierenden Mischorganen ausgerüstet sind, erfolgen. Als Mischer können moderat arbeitende Apparate wie z. B. Pflugscharmischer (Lödige KM-Typen, Drais K-T-Typen) aber auch Intensivmischer (z. B. Eirich, Schugi, Lödige CB-Typen, Drais K-TT-Typen) zum Einsatz kommen. Bei einer bevorzugten Ausführungsform werden Polyester und Additive gleichzeitig vermischt. Es sind jedoch auch mehrstufige Mischprozesse denkbar, bei denen die Polyester und Additive in verschiedenen Kombinationen einzeln oder zusammen mit weiteren Additiven in die Gesamtmischung eingetragen werden. Die Reihenfolge von Langsam- und Schnellmischer kann je nach Erfordernis vertauscht werden. Die Verweilzeiten in der Mischergranulierung betragen bevorzugt 0,5 s bis 20 min, besonders bevorzugt 2 s bis 10 min.

In einer weiteren Ausführungsform erfolgt die Granulierung durch Formgranulierung. Dem gemahlenen Polyester-Pulver wird ein Additiv zugemischt, so dass die Mischung homogen als eine plastifizierbare Masse vorliegt. Der Mischschritt kann in den o. g. Mischapparaten erfolgen, aber auch Kneter oder spezielle Extrudertypen (z. B. Extrud-o-mix^{®} der Fa. Hosokawa-Bepex Corp.) sind denkbar. Die Granuliermasse wird anschließend mittels Werkzeugen durch die Düsenbohrungen einer Pressmatrize gepresst, so dass zylindrisch geformte Extrudate entstehen. Geeignete Apparate für den Extrusionsprozess sind vorzugsweise Ringkollerpressen (z. B. von Fa. Schlüter), oder Kollergänge (z. B. von Fa. Amandus-Kahl), ggf. auch Extruder, ausgeführt als Einwellenmaschine (z. B. von Fa. Hosokawa-Bepex, Fuji-Paudal) oder bevorzugt als Doppelschneckenextruder (z. B. von Fa. Händle). Die Wahl des Durchmessers der Düsenbohrung ist vom Einzelfall abhänging und liegt typischerweise im Bereich von 0,7 - 4 mm.

Als Additiv in Betracht kommen bevorzugt wasserfreie Produkte, wie Fettalkohole, C₈-C₃₁-Fettalkoholpolyalkoxylate mit 1 bis 100 Molen EO, C₈-C₃₁-Fettsäuren (z. B.: Laurin-, Myristin-, Stearinsäure), Dicarbonsäuren, beispielsweise Glutarsäure, Adipinsäure oder deren Anhydride, anionische oder nichtionische Tenside, Wachse, Silikone, anionische und kationische Polymere, Homo-, Co- oder Pfropfcopolymerisate ungesättigter Carbonsäuren und/oder Sulfonsäuren sowie deren Alkalisalze, Celluloseether, Stärke, Stärkeether, Polyvinylpyrrolidon; ein- oder mehrwertige Carbonsäuren, Hydroxycarbonsäuren oder Ethercarbonsäuren mit je 3 bis 8 C-Atomen sowie deren Salze; sowie Polyalkylenglykole. Als Polyalkylenglykole kommen Polyethylenglykole, 1,2-Polypropylenglykole sowie modifizierte Polyethylenglykole und Polypropylenglykole in Betracht. Zu den modifizierten Polyalkylenglykolen zählen insbesondere Sulfate und/oder Disulfate von Polyethylenglykolen oder Polypropylenglykolen mit einer relativen Molekülmasse zwischen 600 und 12.000 und insbesondere zwischen 1.000 und 4.000. Eine weitere Gruppe besteht aus Mono- und/oder Disuccinaten der Polyalkylenglykole, welche wiederum relative Molekülmassen zwischen 600 und 6.000, vorzugsweise zwischen 1.000 und 4.000 aufweisen. Ferner werden auch ethoxylierte Derivate wie Trimethylolpropan mit 5 bis 30 EO umfasst.

Die Additive können in Abhängigkeit von den chemischen Eigenschaften in fester Form, als Schmelze oder als wässrige Lösungen eingesetzt werden.

Die Polyester-Granulate können 0 bis 30 Gew.-% eines oder mehrerer der genannten Additive, bevorzugt 0 bis 25 Gew.-%, besonders bevorzugt 0 bis 20 Gew.-%, bezogen auf das Polyester-Granulat enthalten.

Die erfindungsgemäßen Polyester können auch als Mischung mit Hydrotropen aus der Gruppe der Fettalkoholsulfate, Alkylsulfate, α-Olefinsulfonate dargeboten werden, wobei Alkylarylsulfonate und Arylsulfonate, insbesondere Cumol-, Toluol- und Xylolsulfonate und Mischungen daraus bevorzugt sind.

Sofern vorhanden, beträgt der Anteil an Hydrotropen zweckmäßigerweise von 0,1% bis 15 % Gewichtsprozent, bevorzugt 1 bis 10 Gew.-%, bezogen auf den Polyester-Feststoff.

Die Polyester-Granulate sind rieselfähig und nicht klebrig und können in einfacher Weise auch in hohen Konzentrationen in Lösung gebracht werden und behalten in gelöster Form auch bei längerer Lagerung eine dünnflüssige Konsistenz bei. Der bei SRP häufig auftretende zeitabhängige Verdickungsprozess bei Lagerung bis hin zu gelartigen oder festen Konsistenzen unterbleibt weitestgehend oder tritt nur in geringem Maße auf.

Darüber hinaus zeigen die SRP eine stark vergrauungsinhibierende Wirkung auf Textilien.

Die erfindungsgemäßen Polyester verleihen den Textilfasern signifikant verbesserte schmutzablösende Eigenschaften. Sie unterstützen das Schmutzablösevermögen der übrigen Waschmittelbestandteile gegenüber öligen, fettigen oder Pigmentanschmutzungen wesentlich und verhindern das Ablagern von Partikeln aus der Waschflotte auf das Textil (Vergrauung).

Die erfindungsgemäßen Polyester sind charakterisiert durch eine Löslichkeit in Wasser mit einer deutschen Härte von 3° bei 20 °C von 10 bis 50 Gew.-%.

Der Vorteil dieser Polyester liegt darin, dass die Lösungen in Konzentrationen von 10 bis 50 Gew.-% bei der Lagerung bei 20 °C bis 45 °C über mehrere Monate hinweg Viskositäten im Bereich von 100 bis 8.000 mPas, bevorzugt 300 bis 5.000 mPas, aufweisen.

Die erfindungsgemäßen granulatförmigen Polyester lassen sich deshalb auch in einfacher Weise in flüssige Wasch- und Reinigungsmittel einarbeiten.

Ein weiterer Gegenstand der Erfindung ist die Verwendung der erfindungsgemäßen Polyester in Wasch- und Reinigungsmitteln, in Nachbehandlungsmitteln für die Wäsche, insbesondere in einem Weichspülmittel, in Textilpflegemitteln und Mitteln zur Ausrüstung von Textilien. Die Wasch- und Reinigungsmittelformulierungen, in denen die erfindungsgemäßen Polyester eingesetzt werden können, sind pulver-, granulat-, pasten-, gelförmig oder flüssig.

Beispiele hierfür sind Vollwaschmittel, Feinwaschmittel, Colorwaschmittel, Wollwaschmittel, Gardinenwaschmittel, Baukastenwaschmittel, Waschtabletten, bar soaps, Fleckensalze, Wäschestärken und -steifen, Bügelhilfen.

Ein weiterer Gegenstand der Erfindung sind feste Wasch- und Reinigungsmittel, enthaltend die oben beschriebenen festen Polyester.

Ein weiterer Gegenstand der Erfindung sind flüssige Wasch- und Reinigungsmittel, enthaltend die oben beschriebenen festen Polyester.

Die erfindungsgemäßen Polyester zeichnen sich überraschender Weise auch durch ein hervorragendes Ablaufverhalten, insbesondere beim Spülen von Keramik und Glas aus. Beim Reinigen harter Oberflächen aus Stein, Keramik, Glas, Metall oder Kunststoff wird die Tendenz zu Kalkablagerungen, sowie die Wiederanschmutzung der behandelten Oberfläche reduziert, das Anhaften von Schmutz erschwert und das erneute Reinigen der Oberflächen erleichtert.

Die erfindungsgemäßen Polyester können somit auch in Haushaltsreinigungsmittel, beispielsweise Allzweckreiniger, Geschirrspülmittel, Klarspülmittel, Teppichreinigungs- und Imprägniermittel, Reinigungs-und Pflegemittel für Böden und andere harte Oberfläche, z. B. aus Kunststoff, Keramik, Glas oder mit Nanoteilchen beschichteten Oberflächen eingearbeitet werden.

Beispiele für technische Reinigungsmittel sind Kunststoffreinigungs- und Pflegemittel, etwa für Gehäuse und Autoarmaturen, sowie Reinigungs- und Pflegemittel für lackierte Oberflächen wie etwa Autokarosserien.

Die erfindungsgemäßen Wasch- und Reinigungsmittelformulierungen enthalten mindestens 0,01 Gew.-%, bevorzugt zwischen 0,1 und 10 Gew.-% und besonders bevorzugt 0,2 bis 3 % Gew.-% der erfindungsgemäßen Polyester, bezogen auf das Gesamtgewicht der Wasch- und Reinigungsmittelformulierungen.

Bevorzugt enthalten die flüssigen Wasch- und Reinigungsmittel die erfindungsgemäßen Polyester in Gewichtsmengen von 0,05 bis 5 Gew.-%, bevorzugt 0,1 bis 3 Gew.-%, besonders bevorzugt 0,5 bis 2,0 Gew.-%, bezogen auf das Gesamtgewicht der Wasch- und Reinigungsmittelformulierungen.

Bevorzugt enthalten die festen Wasch- und Reinigungsmittel die erfindungsgemäßen Polyester in Gewichtsmengen von 0,1 bis 5 Gew.-%, bevorzugt 0,5 bis 3 Gew.-%, besonders bevorzugt 1,0 bis 2,0 Gew.-%, bezogen auf die fertigen Mittel.

Die Formulierungen sind je nach ihrer vorgesehenen Anwendung in ihrer Zusammensetzung der Art der zu behandelnden oder zu waschenden Textilien oder der zu reinigenden Oberflächen anzupassen.

Die erfindungsgemäßen Wasch- und Reinigungsmittel können gängige Inhaltsstoffe, wie Tenside, Emulgatoren, Gerüststoffe, Bleichkatalysatoren und -Aktivatoren, Sequestriermittel, Vergrauungsinhibitoren, Farbübertragungsinhibitoren, Farbfixiermittel, Enzyme, optische Aufheller und weich machende Komponenten enthalten. Außerdem können Formulierungen oder Teile der Formulierung durch Farbstoffe und/oder Duftstoffe gezielt eingefärbt und/oder parfümiert werden.

### Beispiele:

### Polyester 1

In einem 1-I Vierhalskolben mit KPG-Rührer, Innenthermometer, Gaseinleitungsrohr und Destillierbrücke werden 227,9 g (3 Mol) 1,2-Propandiol, 66,4 g (1,07 Mol) Ethylenglykol, 72,9 g (0,35 Mol) Tetraethylenglykolmethylether, 291,3 g (1,50 Mol) Terephthalsäuredimethylester und 148,1 g (0,5 Mol) 5-Sulfoisophthalsäure-dimethylester-Na-Salz vorgelegt und das Reaktionsgemisch durch Einleitung von N₂ inertisiert. Im Gegenstrom werden anschließend 0,5 g Titantetraisopropylat und 0,3 g Natriumacetat zur Reaktionsmischung hinzugegeben. Das Gemisch wird auf ca. 160 °C ca. 15 bis 20 Minuten erhitzt. Bei dieser Temperatur beginnt die Umesterung; das entstehende Methanol wird abdestilliert.

Während der Destillation wird die Temperatur innerhalb von 3 h auf 210 °C erhöht. Anschließend wird auf 195 °C abgekühlt und innerhalb von 1 h der Druck auf 10 mbar reduziert. Während der dreistündigen Vakuumdestillation wird die Kondensation durch Abdestillation der überschüssigen Alkoholmenge vervollständigt. Für 5 Minuten wird das Vakuum auf 5 mbar reduziert, anschließend mit N₂ belüftet und die Schmelze auf Bleche ausgetragen.

### Polyester 2

In einem 1-I Vierhalskolben mit KPG-Rührer, Innenthermometer, Gaseinleitungsrohr und Destillierbrücke werden 210,6 g (2,77 Mol) 1,2-Propandiol, 60,5 g (0,98 Mol) Ethylenglykol, 145,8 g (0,7 Mol) Tetraethylenglykolmethylether, 291,3 g (1,50 Mol) Terephthalsäuredimethylester und 148,1 g (0,5 Mol) 5-Sulfoisophthalsäure-dimethylester-Na-Salz vorgelegt und das Reaktionsgemisch durch Einleitung von N₂ inertisiert. Im Gegenstrom werden anschließend 0,5 g Titantetraisopropylat und 0,3 g Natriumacetat zur Reaktionsmischung hinzugegeben. Das Gemisch wird auf ca. 160 °C ca. 15 bis 20 Minuten erhitzt. Das weitere Vorgehen erfolgt wie in "Polyester 1" beschrieben.

### Polyester 3

In einem 1-I Vierhalskolben mit KPG-Rührer, Innenthermometer, Gaseinleitungsrohr und Destillierbrücke werden 182,6 g (2,40 Mol) 1,2-Propandiol, 84,5 g (1,36 Mol) Ethylenglykol, 145,8 g (0,7 Mol) Tetraethylenglykolmethylether, 291,3 g (1,50 Mol) Terephthalsäuredimethylester und 148,1 g (0,50 Mol) 5-Sulfoisophthalsäure-dimethylester-Na-Salz vorgelegt und das Reaktionsgemisch durch Einleitung von N₂ inertisiert. Im Gegenstrom werden anschließend 0,5 g Titantetraisopropylat und 0,3 g Natriumacetat zur Reaktionsmischung hinzugegeben. Das Gemisch wird auf ca. 160 °C ca. 15 bis 20 Minuten erhitzt. Das weitere Vorgehen erfolgt wie in "Polyester 1" beschrieben.

### Polyester 4V (Vergleichsbeispiel)

In einem 1-I Vierhalskolben mit KPG-Rührer, Innenthermometer, Gaseinleitungsrohr und Destillierbrücke werden 233,0 g (3,75 Mol) Ethylenglykol, 72,9 g (0,35 Mol) Tetraethylenglykolmethylether, 291,3 g (1,50 Mol) Terephthalsäuredimethylester und 148,1 g (0,50 Mol) 5-Sulfoisophthalsäure-dimethylester-Na-Salz vorgelegt und das Reaktionsgemisch durch Einleitung von N₂ inertisiert. Im Gegenstrom werden anschließend 0,5 g Titantetraisopropylat und 0,3 g Natriumacetat zur Reaktionsmischung hinzugegeben. Das Gemisch wird auf ca. 160 °C ca. 15 bis 20 Minuten erhitzt. Das weitere Vorgehen erfolgt wie in "Polyester 1" beschrieben.

**Tabelle 1: Löslichkeitsverhalten: 40 %ige wässrige Lösung bei 22 °C; Viskositätswerte, gemessen unmittelbar nach der Synthese und nach 28 Tagen:**

| Polyester | Viskosität bei 22 °C [mPas] am Tag 1 | Viskosität bei 22 °C [mPas] am Tag 28 |
|---|---|---|
| 1 | 500 | 650, klar |
| 2 | 450 | 650, klar bis opak |
| 3 | 800 | nach 17 Tagen leicht pastös |
| 4V | schnittfest | - |

Viskositätsmessung, Brookfield Spindel 2, 20 Umdrehungen, 22 °C

Analog Beispiel 1 werden die in der Tabelle 2 angegebenen Polyester hergestellt und die Viskosität wie vorstehend beschrieben gemessen. Die Beispiele 5V bis 9V sind Vergleichsbeispiele.

**Tabelle 2**

| Polymer | DMT [Mol] | 5-SIM [Mol] | TetGME [Mol] | EG [Mol] | PG [Mol] | Aussehen, Viskosität [mPas], Tag 1 | Aussehen, Viskosität [mPas], Tag x |
|---|---|---|---|---|---|---|---|
| 5V | 3 | 1 | 1 | 1 | 1,05 | trüb, 30.000 | Tag 3, stichfest |
| 6V | 3 | 1 | 1 | 1 | 1,16 | trüb, 35.000 | Tag 3, stichfest |
| 7V | 3 | 1 | 1 | 1 | 1,28 | trüb, 20.000 | Tag 10, pastös |
| 8V | 3 | 1 | 1 | 1 | 1,42 | leicht trüb, 1.000 | Tag 17 pastös |
| 9V | 3 | 1 | 1 | 1 | 1,61 | leicht trüb, 1.000 | Tag 28, pastös |
| 10 | 3 | 1 | 1 | 1 | 1,97 | klar, 200 | Tag 28, leicht trüb, flüssig, 8.000 |
| 11 | 3 | 1 | 1 | 1 | 2,22 | klar, 190 | Tag 28, leicht trüb, flüssig, 5.200 |
| 12 | 3 | 1 | 1 | 1 | 2,50 | klar, 340 | Tag 28, klar, flüssig, 5.000 |
| 13 | 3 | 1 | 1 | 1 | 2,84 | klar, 190 | Tag 28, klar, flüssig, 4.500 |
| 14 | 3 | 1 | 1 | 1 | 5,36 | leicht trüb, 350 | Tag 28, opak, flüssig 6..000 |
| 15 | 3 | 1 | 1 | 1 | 8,51 | trüb, 580 | Tag 28, leicht trüb, flüssig, 7.500 |

| | | | | | | | |
|---|---|---|---|---|---|---|---|
| DMT = Terephthalsäuredimethylester 5-SIM = 5-Sulfoisophthalsäure-dimethylester-Na-Salz TetGME = Tetraethylenglykolmethylether EG = Ethylenglykol PG = 1,2-propylenglykol | | | | | | | |

Vergrauungsinhibierende Wirkung an Polyester-Textilfasern (Testex PES 730): Die Polymere werden in einer Konzentration von 60 ppm (Wirkstoff), bezogen auf das Testwaschmittel Formulierung (O), den jeweiligen Waschlaugen zugesetzt. Die Waschlaugen enthalten 6 g/l der Formulierung "O". Zur Waschlauge werden 100 mg eines Olivenöl/Gasruß Gemisches hinzugesetzt und 5 min unter Rühren in der Waschflotte dispergiert. Anschließend wird in der so konditionierten Waschlauge weißes Polyestergewebe Testex PES 730 (Testfabrics Inc., USA) bei 20 °C für 20 Minuten, bei einer Wasserhärte von 15°dH-H2O/ Ca:Mg = 3:2; gewaschen.

Nach 4-maligem Spülen mit Frischwasser werden die Textgewebe zuerst getrocknet und anschließend ihr Weißgrad mit einem Elrepho Spektralphotometer bestimmt und die Remission gegen ein unbehandeltes Standardtestgewebe Testex^{®} PES 730 bestimmt. Remission [%, 457 nm] / 400 nm Kantenfilter.

Als Remission bezeichnet man den Weißgrad des verwendeten Textgewebes nach dem Waschen im Vergleich zu einem unbehandelten Gewebe (≡ 100 %). Je näher der Messwert (gemessen an einem Elrepho-Spektralphotometer) bei 100 % liegt, desto weißer ist das gemessene Testgewebe und umso effizienter ist der Polyester.

**Tabelle 3**

| | Formulierung "O" | Polyester 1 | Polyester 2 | Polyester 3 | Polyester 10 |
|---|---|---|---|---|---|
| Remission [%] | 69,4 | 84.9 | 85,1 | 81,1 | 78,4 |

### Formulierung (O):

### Bestandteile in Gewichtsprozenten:

| | | |
|---|---|---|
| A | Kali-Kokos-Seife (27 %ig) | 3 % |
| B | 1,2-Propandiol | 5 % |
| C | Genapol LA-070 (Clariant) | 4 % |
| | Laurylalkoholethoxylate, 7EO | |
| D | Alkylbenzolsulfonat (Marlon A350 / 50 %ig) | 17 % |
| E | Natriumcumolsulfonat | 0,5 % |
| F | Zitronensäure (30 %ige-Lsg.) | 0,6 % |
| G | Wasser | ad 100 |
| pH-Wert: | | 7,5 - 7,6 |

## Patentansprüche

1. Polyester, erhältlich durch Polymerisation der Komponenten
a) einer oder mehreren sulfogruppenfreien aromatischen Dicarbonsäuren und/ oder deren Salzen und/ oder deren Anhydriden und/oder deren Ester,
b) optional einer oder mehreren sulfogruppenhaltigen Dicarbonsäuren, deren Salzen und/oder deren Anhydriden und/oder deren Ester,
c) 1,2-Propylenglykol,
d) Ethylenglykol,
e) einer oder mehreren Verbindungen der Formel (1)
R¹O(CHR²CHR³O)ₙH (1)
wobei
R¹ für eine lineare oder verzweigte, gesättigte oder ungesättigte Alkylgruppe mit 1 bis 22 C-Atomen steht,
R² und R³ unabhängig voneinander für Wasserstoff oder für eine Alkylgruppe mit 1 bis 4 Kohlenstoffatomen stehen, und
n eine Zahl von 1 bis 50 ist,
f) optional eine oder mehrere Verbindungen der Formel (2)
H-(OCH₂CH₂)ₘ-SO₃X (2),
wobei
m für eine Zahl 1 bis 10 und
X für Wasserstoff oder ein Alkalimetallion steht, und
g) optional ein oder mehrere vernetzend wirkende polyfunktionelle Verbindungen,
mit der Maßgabe, dass mindestens eine der Komponenten b) oder f) vorhanden ist, und mit der weiteren Maßgabe, dass das molare Verhältnis der Komponenten c) 1,2-Propylenglykol zu d) Ethylenglykol größer oder gleich 1,70 ist.

2. Polyester gemäß Anspruch 1, **dadurch gekennzeichnet, dass** das molare Verhältnis 1,2-Propylenglykol : Ethylenglykol 1,70 bis 10,0 beträgt.

3. Polyester gemäß Anspruch 1 oder 2, **dadurch gekennzeichnet, dass** das molare Verhältnis 1,2-Propylenglykol : Ethylenglykol 2,7 bis 5,0 beträgt.

4. Polyester nach mindestens einem der Ansprüche 1 bis 3, erhältlich durch Polymerisation der Komponenten a) bis g) in folgenden Molverhältnissen, bezogen auf 1 Mol Komponente a):
0 bis 4 Mol Komponente b),
0,1 bis 4 Mol der Summe der Komponenten c) + d),
0,1 bis 4 Mol Komponente e),
0 bis 4 Mol Komponente f),
0 bis 0,2 Mol Komponente g).

5. Polyester nach mindestens einem der Ansprüche 1 bis 3, erhältlich durch Polymerisation der Komponenten a) bis g) in folgenden Molverhältnissen, bezogen auf 1 Mol Komponente a):
0,1 bis 2 Mol Komponente b),
0,5 bis 4 Mol der Summe der Komponenten c) + d),
0,1 bis 4 Mol Komponente e),
0 Mol Komponente f),
0 Mol Komponente g).

6. Polyester nach einem oder mehreren der Ansprüche 1 bis 5, **dadurch gekennzeichnet, dass** Komponente a) eine Verbindung aus der Gruppe Terephthalsäure, C₁-C₄-Alkylester der Terephthalsäure, Isophthalsäure und C₁-C₄-Alkylester der Isophthalsäure ist.

7. Polyester nach einem oder mehreren der Ansprüche 1 bis 6, **dadurch gekennzeichnet, dass** Komponente b) eine Verbindung aus der Gruppe 5-Sulfoisophthalsäure, Alkalimetallsalze der 5-Sulfoisophthalsäure, 5-Sulfoisophthalsäuredi(C₁-C₄)alkylester und 5-Sulfoisophthalsäuredi(C₁-C₄-alkyl)ester-Alkalimetallsalz ist.

8. Polyester nach einem oder mehreren der Ansprüche 1 bis 7, **dadurch gekennzeichnet, dass** Komponente e) ein Polyethylenglykolmonomethylether der Formel (1a) ist
CH₃-O-(C₂H₄O)ₙ-H (1a)
mit n = 2 bis 10.

9. Verfahren zur Herstellung der Polyester nach einem oder mehreren der Ansprüche 1 bis 8 durch Polykondensation der Komponenten a) bis g).

10. Verwendung der Polyester nach einem oder mehreren der Ansprüche 1 bis 8 in Wasch- und Reinigungsmitteln, in einem Weichspülmittel, in Textilpflegemitteln und Mitteln zur Ausrüstung von Textilien.

11. Verwendung nach Anspruch 10 als Soil Release Polymer.

12. Festes Wasch- oder Reinigungsmittel, enthaltend einen oder mehrere der Polyester gemäß einem oder mehreren der Ansprüche 1 bis 8.

13. Flüssiges Wasch- oder Reinigungsmittel, enthaltend einen oder mehrere der Polyester gemäß einem oder mehreren der Ansprüche 1 bis 8.

14. Wasch- oder Reinigungsmittel nach Anspruch 12 oder 13, enthaltend 0,1 bis 10 Gew.-% der Polyester, bezogen auf das Gesamtgewicht des Wasch-, Pflege- oder Reinigungsmittels.

## Claims

1. Polyester obtainable by polymerizing the components
a) one or more sulfo-free aromatic dicarboxylic acids and/or salts thereof and/or anhydrides thereof and/or esters thereof,
b) optionally one or more sulfo-containing dicarboxylic acids, salts thereof and/or anhydrides thereof and/or esters thereof,
c) 1,2-propylene glycol,
d) ethylene glycol,
e) one or more compounds of the formula (1)
R¹O(CHR²CHR³O)ₙH (1)
where
R¹ is a linear or branched, saturated or unsaturated alkyl group having 1 to 22 carbon atoms,
R² and R³ are each independently hydrogen or an alkyl group having 1 to 4 carbon atoms, and
n is a number from 1 to 50,
f) optionally one or more compounds of the formula (2)
H-(OCH₂CH₂)ₘ-SO₃X (2)
where
m is a number from 1 to 10 and
X is hydrogen or an alkali metal ion, and
g) optionally one or more crosslinking polyfunctional compounds,
with the proviso that at least one of components b) or f) is present, and with the further proviso that the molar ratio of components c) 1,2-propylene glycol to d) ethylene glycol is greater than or equal to 1.70.

2. Polyester according to Claim 1, **characterized in that** the molar ratio of 1,2-propylene glycol : ethylene glycol is 1.70 to 10.0.

3. Polyester according to Claim 1 or 2, **characterized in that** the molar ratio of 1,2-propylene glycol : ethylene glycol is 2.7 to 5.0.

4. Polyester according to at least one of Claims 1 to 3, obtainable by polymerizing components a) to g) in the following molar ratios, based on 1 mol of component a):
0 to 4 mol of component b),
0.1 to 4 mol of the sum of components c) + d),
0.1 to 4 mol of component e),
0 to 4 mol of component f),
0 to 0.2 mol of component g).

5. Polyester according to at least one of Claims 1 to 3, obtainable by polymerizing components a) to g) in the following molar ratios, based on 1 mol of component a):
0.1 to 2 mol of component b),
0.5 to 4 mol of the sum of components c) + d),
0.1 to 4 mol of component e),
0 mol of component f),
0 mol of component g).

6. Polyester according to one or more of Claims 1 to 5, **characterized in that** component a) is a compound from the group of terephthalic acid, C₁-C₄-alkyl esters of terephthalic acid, isophthalic acid and C₁-C₄-alkyl esters of isophthalic acid.

7. Polyester according to one or more of Claims 1 to 6, **characterized in that** component b) is a compound from the group of 5-sulfoisophthalic acid, alkali metal salts of 5-sulfoisophthalic acid, di(C₁-C₄)alkyl 5-sulfoisophthalates and di(C₁-C₄-alkyl) 5-sulfoisophthalate alkali metal salts.

8. Polyester according to one or more of Claims 1 to 7, **characterized in that** component e) is a polyethylene glycol monomethyl ether of the formula (1a)
CH₃-O-(C₂H₄O)ₙ-H (1a)
where n = 2 to 10.

9. Process for producing the polyesters according to one or more of Claims 1 to 8 by polycondensation of components a) to g).

10. Use of the polyesters according to one or more of Claims 1 to 8 in washing and cleaning compositions, in a fabric softener, in textile care compositions and textile finishing compositions.

11. Use according to Claim 10 as a soil release polymer.

12. Solid washing or cleaning composition comprising one or more of the polyesters according to one or more of Claims 1 to 8.

13. Liquid washing or cleaning composition comprising one or more of the polyesters according to one or more of Claims 1 to 8.

14. Washing or cleaning composition according to Claim 12 or 13, comprising 0.1 to 10% by weight of the polyester, based on the total weight of the washing, care or cleaning composition.

## Revendications

1. Polyesters, pouvant être obtenus par polymérisation des composants
a) un ou plusieurs acides dicarboxyliques aromatiques exempts de groupes sulfo et/ou leurs sels et/ou leurs anhydrides et/ou leurs esters,
b) éventuellement un ou plusieurs acides dicarboxyliques contenant des groupes sulfo, leurs sels et/ou leurs anhydrides et/ou leurs esters,
c) du 1,2-propylèneglycol
d) de l'éthylèneglycol
e) un ou plusieurs composés de formule (1)
R¹O(CHR²CHR³O)ₙH (1)
où
R¹ représente un groupe alkyle linéaire ou ramifié, saturé ou insaturé, comprenant 1 à 22 atomes de carbone,
R² et R³ représentent, indépendamment l'un de l'autre, hydrogène ou un groupe alkyle comprenant 1 à 4 atomes de carbone, et
n vaut un nombre de 1 à 50,
f) éventuellement un ou plusieurs composés de formule (2)
H-(OCH₂CH)ₘ-SO₃X (2),
où
m vaut un nombre de 1 à 10 et
X représente hydrogène ou un ion de métal alcalin et
g) éventuellement un ou plusieurs composés polyfonctionnels à effet réticulant,
à condition qu'au moins un des composants b) ou f) soit présent et à autre condition que le rapport molaire des composants c) 1,2-propylèneglycol à d) éthylèneglycol soit supérieur ou égal à 1,70.

2. Polyesters selon la revendication 1, **caractérisés en ce que** le rapport molaire 1,2-propylèneglycol:éthylèneglycol vaut 1,70 à 10,0.

3. Polyesters selon la revendication 1 ou 2, **caractérisés en ce que** le rapport molaire 1,2-propylèneglycol:éthylèneglycol vaut 2,7 à 5,0.

4. Polyesters selon au moins l'une quelconque des revendications 1 à 3, pouvant être obtenus par polymérisation des composants a) à g) dans les rapports molaires suivants, par rapport à une mole de composant a) :
0 à 4 moles de composant b),
0,1 à 4 moles de la somme des composants c) + d),
0,1 à 4 moles de composant e),
0 à 4 moles de composant f),
0 à 0,2 mole de composant g).

5. Polyesters selon au moins l'une quelconque des revendications 1 à 3, pouvant être obtenus par polymérisation des composants a) à g) dans les rapports molaires suivants, par rapport à une mole de composant a) :
0,1 à 2 moles de composant b),
0,5 à 4 moles de la somme des composants c) + d),
0,1 à 4 moles de composant e),
0 mole de composant f),
0 mole de composant g).

6. Polyesters selon l'une ou plusieurs des revendications 1 à 5, **caractérisés en ce que** le composant a) est un composé du groupe formé par l'acide téréphtalique, les esters C₁-C₄-alkyliques de l'acide téréphtalique, l'acide isophtalique et les esters C₁-C₄-alkyliques de l'acide isophtalique.

7. Polyesters selon l'une ou plusieurs des revendications 1 à 6, **caractérisés en ce que** le composé b) est un composé du groupe formé par l'acide 5-sulfo-isophtalique, les sels de métal alcalin de l'acide 5-sulfo-isophtalique, les esters di(C₁-C₄)alkyliques de l'acide 5-sulfo-isophtalique et les sels métalliques des esters di(C₁-C₄)alkyliques de l'acide 5-sulfo-isophtalique.

8. Polyesters selon l'une ou plusieurs des revendications 1 à 7, **caractérisés en ce que** le composant e) est un polyéthylèneglycolmonométhyléther de formule (1a)
CH₃-O-(C₂H₄O)ₙ-H (1a)
avec n = 2 à 10.

9. Procédé pour la préparation des polyesters selon l'une ou plusieurs des revendications 1 à 8 par polycondensation des composants a) à g).

10. Utilisation des polyesters selon l'une ou plusieurs des revendications 1 à 8 dans des agents de lavage et de nettoyage, dans un assouplissant, dans des agents d'entretien de textile et des agents pour l'apprêt de textiles.

11. Utilisation selon la revendication 10 comme polymère antisalissure.

12. Agent de lavage ou de nettoyage solide, contenant un ou plusieurs des polyesters selon l'une ou plusieurs des revendications 1 à 8.

13. Agent de lavage ou de nettoyage liquide, contenant un ou plusieurs des polyesters selon l'une ou plusieurs des revendications 1 à 8.

14. Agent de lavage ou de nettoyage selon la revendication 12 ou 13, contenant 0,1 à 10% en poids des polyesters, par rapport au poids total de l'agent de lavage, d'entretien ou de nettoyage.
